# EUROPEAN PATENT SPECIFICATION

(11) **EP 1 041 894 B1**
(45) Date of publication and mention of the grant of the patent: **04.06.2003**
(21) Application number: 98959508.7
(22) Date of filing: 20.11.1998
(51) Int. Cl.: A23G 3/30

(54) **METHOD FOR CONTINUOUSLY PRODUCING CHEWING GUM**
VERFAHREN ZUR KONTINUIERLICHEN HERSTELLUNG VON KAUGUMMI
PROCEDE DE PRODUCTION EN CONTINU DE GOMME A MACHER

(30) Priority: 30.12.1997 US 1158
(43) Date of publication of application: 11.10.2000
(73) Proprietor: Warner-Lambert Company LLC, Morris Plains, New Jersey 07950 (US)
(72) Inventor: WARRINGTON, Richard, Mark, Sparta, NJ 07871 (US); JANI, Bharat, K., East Brunswick, NJ 08816 (US); BARRERA, George, Albert, Caledonia, IL 61011 (US); POLAK, William, M., Morris Plains, NJ 07950 (US); BUNKERS, Joseph, Caledonia, IL 61011 (US); DUGAN, James, A., Machesney Park, IL 61115 (US)
(74) Representative: Tesch, Rudolf, Dr.
(86) International application number: US9824680
(87) International publication number: WO99033353

(56) References cited:
- US-A- 4 409 244
- US-A- 4 555 407
- US-A- 5 612 071

## Description

### Technical Field

This invention relates to improved processes for continuously producing gums, such as chewing gums and bubble gums, which have improved texture and flavor release.

### Background Of The Invention

There are several systems known today for producing gum bases and final gum products, such as chewing gums and bubble gums. The present invention can be used with all types of sugared chewing gums and bubble gums. For ease of reference, all such gums will be referred to herein by the single term "chewing gum". Typically, the chewing gum base is made separately from the final chewing gum product, although there are several systems which are capable of producing a final chewing gum product in one continuous process.

In general, a chewing gum composition typically comprises a water-soluble bulk portion, a water-insoluble chewing gum base portion, and typically water and soluble flavoring agents. The insoluble gum base generally comprises elastomers, elastomer solvents, fillers, resins, polyvinyl acetate (PVA), fats, plasticizers, waxes, emulsifiers, and other miscellaneous ingredients. The flavoring can be added in various forms, and can either be sugar based for sweetness or acid based for sourness or tartness. The water-soluble portion of the gum composition decimates with a portion of the flavoring agents over a period of time during chewing. The gum base portion is retained in the mouth throughout the time the product is chewed.

Numerous chewing gums and chewing gum bases in the past have been produced using a batch method. Single blade batch mixers are typically used for these processes. The gum base ingredients are added either separately or simultaneously into the batch mixer and the materials are melted and mixed over time. After the gum base is processed, the molten gum base batch is emptied into coated or lined pans, or transferred to other equipment such as holding tanks or filling devices, then extruded or cast into shape, and allowed to cool and solidify, before being ready for use in a chewing gum.

When the final chewing gum products are processed using a batch method, portions of the gum base, together with softeners and bulking agents, are added to the mixer. Later, flavorings such as flavored oils and/or spray-dried flavors (sweeteners or acids) are added while mixing is continued until a homogenous mass is achieved. Systems of this type is shown, for example, in U.S. Patent Nos. 4,816,265, 5,000,965 and 5,057,328. The chewing gum mass is then cooled and later rolled, scored, and wrapped into the final product.

Continuous extrusion machines have also been used for producing chewing gum bases and the final chewing gum products, or both. The use of continuous extruders to make a final chewing gum product is shown, for example, in U.S. Patent No. 5,135,762 to Degady et al., U.S. Patent No. 5,045,325 to Lesko et al., and U.S. Patent No. 4,555,407 to Kramer et al. Processes known in the art for continuously producing a chewing gum base with the use of a continuous extrusion machine are shown, for example, in U.S. Patent Nos. 5,419,919 and 5,486,366 both to Song et al.

The chewing gum base and chewing gum product processes disclosed in these patents typically utilize a continuous extrusion machine, such as a twin-screw extruder. These extruders typically have several different feed inlets were the ingredients are added. The elongated screws inside the barrels of the extruders are equipped with different types of elements. Continuous extrusion machines that can be used for producing chewing gum bases and final chewing gum products include extruders from Togum, Baker Perkins, Werner & Pfleiderer Corp., Japan Steel Works, Leistriztz, WLS, and Buss Manufacturing Company.

Several efforts have been attempted in the past to extend the flavor of chewing gums over a longer period of time. These efforts include, for example, a controlled release of flavoring, micro-encapsulation of flavoring or other materials, and the like. Such systems are shown, for example, in U.S. Patent Nos. 5,057,328 to Cherukuri et al. and 5,116,627 to Rutherford et al. Other methods involve granulating or agglomerating ingredients into a granular matrix to provide for a more controlled release of ingredients. This is shown, for example, in U.S. Patent No. 5,124,160 to Zibell et al. Efforts have also been made to change the texture of the final chewing gum product. U.S. Patent No. 4, 409, 244 discloses a chewing gum which has a soft consistency, an easy bite through, improved flavour/shelf life and does not stick to wrapper.

It is general object of the present invention to provide an improved process for the production of chewing gum products. It is also an object of the present invention to provide an improved process for increasing the length of the flavor profile for the chewing gum product.

It is still another object of the present invention to provide a system for continuously preparing chewing gum products which have a controlled texture profile as well as a controlled flavor profile. It is a further object of the present invention to provide an improved process for continuously producing chewing gum products in which the flavor is released more slowly and evenly than in known chewing gum products.

These and other objects are met by the present invention in which a preferred form of the invention is described hereinafter.

### Summary Of The Invention

The present invention provides an improved system for continuously producing a chewing gum product. In particular, the present invention provides an improved process for producing a final chewing gum product which has an improved texture and which can have its flavor profile changed as desired to have an initial "burst" of flavor and/or a slower and longer release of flavor.

In accordance with the present invention, a continuous extrusion processor is used to produce the chewing gum product. Various ingredients are added to the extruder, including a gum base, sugar, softeners, plasticizers, oils and flavoring. The sugar is divided into two portions with one portion being added at the beginning of the extrusion process and the other portion being added as one of the last ingredients. Dividing the sugar into two portions affects the texture of the final chewing gum product and makes it smoother and more chewable. Adding the flavor downstream of the other ingredients creates an initial "burst" of flavor when the gum is chewed. Splitting the flavor and adding a portion of it upstream changes the flavor profile of the gum and creates a slower and more even release of the flavor throughout the chew.

Any conventional flavorings can be used with the present invention, including sweet flavorings and sour or tart flavorings.

Dividing the sugar material in the extruder, together with controlling other extrusion parameters, such as the speed of the extruder and the temperatures of the various extrusion barrels, allows control of the flavor and texture profiles and allows production of various types of chewing gum products.

The present invention allows a better quality final product to be prepared, as well as a product in which the flavor can be released in different amounts and at different times in the chew.

These and other features, advantages, and benefits of the present invention will become apparent from a review of the following description, when taken in view of the accompanying drawings and appended claims.

### Brief Description Of The Drawings

FIGURE 1 is a schematic diagram of a continuous chewing gum system in accordance with the present invention; and
FIGURE 2 depicts the system of Figure 1 in which a side feeder is utilized.

### Best Modes For Carrying Out The Invention

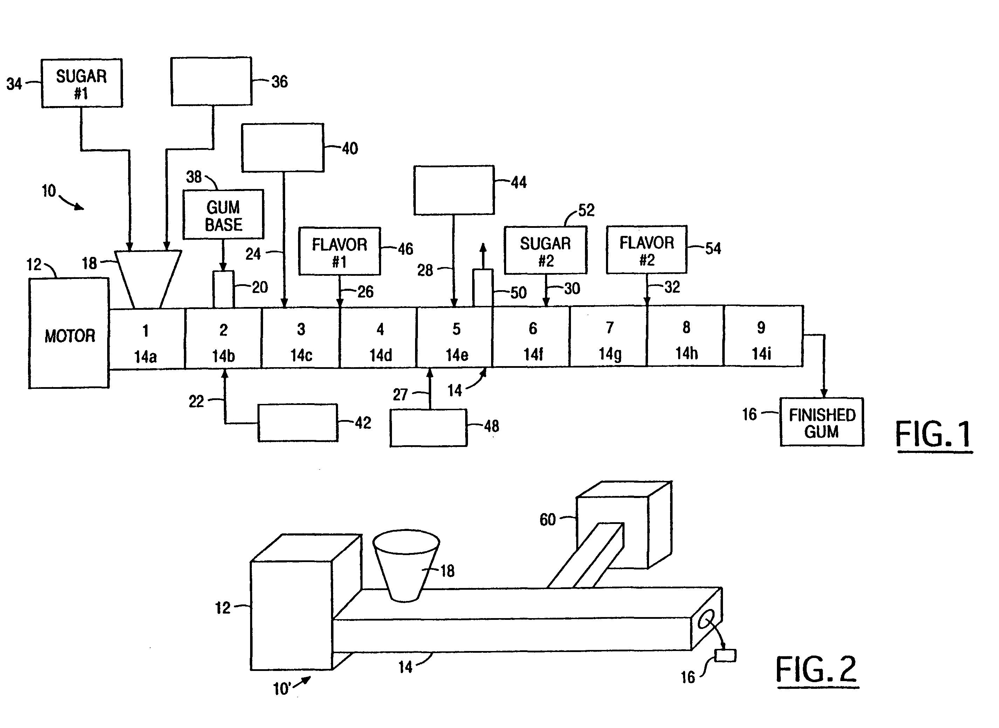

Referring to Figure 1, a continuous chewing gum manufacturing process is shown schematically which utilizes an extrusion mixer 10. The extruder 10 can be of any conventional type and has a motor and control mechanism 12 and an elongated barrel member 14. The continuous extruder 10 can be of any conventional type available from many extruder manufacturers known today, such as Japan Steel Works, Leistriztz, Werner & Pfleiderer Corp., Togum, WLS, Baker Perkins, and/or Buss Manufacturing Company. Preferably, however, the continuous extruder 10 is a co-rotating twin screw extruder.

Typically, the continuous extrusion machines use twin-screw mechanisms which are either co-rotational, counter-rotational, intermeshing or tangential. These extruders have one or two elongated screw members in the barrels 14 which intermix and process ingredients and materials for the final gum product 16. The elongated screw members have different types of screw elements on them for processing the materials that are fed into the barrel 14.

The elongated screw members utilize different types of screw elements for processing the materials in the extruder. The most common types of screw elements include conveying elements, compression elements, reverse conveyance elements, homogenizing elements such as shearing disks and tooth elements, and kneading disks and kneading blocks. These elements, and other elements typically used in extruding machines, especially twin-screw extruders, are well known in the art and are commercially available. The elements are often specifically designed for the particular type of extruder utilized and the particular type of ingredients utilized in the final desired product.

The extruders typically have a number of separate stages along the length of the barrel 14. In the preferred Werner & Pfleiderer embodiment shown in Figure 1, nine separate barrel sections or members are provided (numbered 1-9). Each of the barrel sections 14a through 14i are separately heated and cooled in order to maintain the material within the barrel at an appropriate processing temperature and consistency.

The extruders typically have several different feed inlets where the ingredients are added. For example, as shown in Figure 1, the extruder 10 has a first feed inlet 18 as well as other inlets 20, 22, 24, 26, 27, 28, 30 and 32 positioned downstream on the barrel 14. Typically solid ingredients, such as sugar 34 and salvage 36 are introduced into the barrel through the upstream initial inlet port 18. Other ingredients, usually in a liquid condition, are introduced into one or more of the downstream ports. These other ingredients include, for example, gum base 38, softeners or plasticizers, such as corn syrup 40, lecithin 42 and oil 44, flavorings 46, and coloring 48.

The chewing gum ingredients are added to the barrel of the extruder through one or more conventional mechanisms or systems. For example, the sugar 34 and salvage materials 36 can be added by conventional loss-in-weight (LIW) feeders. The LIW feeders meter and regulate the flow of material into the barrel 14. The gum base 38 is typically introduced into the extruder in a molten condition by means of a conventional metering and pumping system. The softeners, plasticizers, oils and coloring are liquid materials and are typically added into the barrel through conventional liquid metering and pumping systems. The flavoring materials or ingredients 46 are typically injected into the barrel 14 by means of a conventional liquid injection system.

The second portion 52 (sugar #2) of the sugar ingredient can also be added to the main extruder 10' by the use of a conventional side feeder apparatus 60, as shown in Figure 2.

In the barrel 14, the material and ingredients are introduced into the screw cavity in barrel sections or members 14a-14f (Nos. 1-6) where they are mixed together forming a homogeneous mass. The mixed material is then compressed in barrel sections 14g-14i (Nos. 7-9) where the internal cavity is filled and pressure is built up. A vent 50 is typically provided between the mixing and compression sections of the barrel to eliminate undesired build up of gases prior to the mass of material entering the compression portion of the barrel.

In order to introduce certain materials into the extrusion process, it is also possible to use a side feeder. The side feeder can be any conventional extrusion apparatus, such as those available from Buss Manufacturing Company, Baker Perkins, and Werner & Pfleiderer Corp. The side feeder has a motor and control mechanism and an elongated barrel. An inlet chute is used to supply materials to the side feeder. The side feeder is connected to the main extruder, preferably, with an adaptor mechanism.

The gum base 32 is typically intermixed with a filler of some type, such as dicalcium phosphate. The dicalcium phosphate acts as a lubricant or dusting agent, and other conventional materials could be used for that same purpose, such as talc or atomite.

Once the gum materials are introduced into the extruder 10, they are conveyed by the elongated screws along the length of the barrel 14. The final gum product 16 is extruded from the extruder 10 at the downstream end.

In accordance with the present invention, certain selected ingredients of the chewing gum product are or can be divided into two portions so that they can be added at different stages in the extrusion process in order to secure different profiles of texture and flavoring. In particular, the sugar and flavoring ingredients can be split into two portions in accordance with the present invention.

As shown in Figure 1, the sugar ingredient is added at two separate locations in the gum producing system. The sugar is divided into two portions (sugar #1-34 and sugar #2-52), each portion having substantially the same size and volume. The first portion or quantity of sugar 34 is added at the upstream or initial end of the extrusion process, preferably at inlet chute 18 in barrel section 14a (No. 1). The second portion or quantity of sugar 52 is added at a position downstream of all of the other ingredients, such as at barrel section 14f (No. 6).

Splitting the sugar material into two portions and adding them at separate locations in the gum extrusion process affects the graininess and texture of the final product. It results in a more uniform and less granular final gum product than if all the sugar is added at one time and in one location. (Adding all of the required sugar at location 14f (No. 6) results in a less uniform and grainier final gum product.) Adding the sugar at two separate locations also allows the sugar to be blended and mixed into the material mass more evenly, which provides a better sweetness profile over time for the final gum product when it is chewed.

Although the preferred process in accordance with the present invention divides the sugar material into two portions having substantially the same weight and amount, it is also possible to divide the sugar into two portions which differ significantly in weight and amount. For example, adding 60-75% of the sugar material at the downstream location (barrel section 14f) and adding the remaining 25-40% of the sugar material at the initial chute (barrel section 14a) is possible, although it may result in a final gum material which is not as soft as that produced by the preferred process.

The flavor ingredient can also be divided and added in two portions and positions in the extrusion process. For example, the flavor can be divided into two portions with the first portion 46 (Flavor #1) being added at port 26 and the second portion 54 (Flavor #2) being added at the intersection port 32 between barrels 14g and 14h. By adding a portion of the flavor at an upstream portion of the extruder, the flavoring is incorporated more evenly and thoroughly into the gum material in the extruder and results in a more even and longer lasting flavor release in the final product. By adding a portion of the flavor at a downstream port, such as at 32 between barrel sections 14g and 14h, an initial "burst" of flavor can be provided in the final gum product 16.

As indicated above, the flavoring which can be used for the gum product can either be a sweet flavoring or a sour or tart flavoring, each of which is conventionally known in the chewing gum field. In this regard, sour or tart flavorings are typically provided by the addition of a citric acid.

Auxiliary systems (not shown) which aid in the addition and injection of the solid or liquid ingredients into the extruder 10 are positioned along the length of the extruder. Such feeding systems which may include pumping and conveying elements, side feeders, gravity feeders and the like, are all conventionally known and do not have to be shown in detail herein.

If an acid material is added to the extruder 10 in order to get a sour finished gum product, then the amount of acid added should be regulated relative to the amount of sugar in order to prevent graininess in the final product. The acid materials are typically added in a granular condition and if more than 2 - 3 percent of acid materials are added to the composition, then the splitting of the sugar material into two portions is necessary in order to prevent or minimize the graininess of the final finished gum product.

Also, the speed of the extruder can be changed to control the texture and "hardness" of the final finished gum product 16. The faster the extruder speed, the softer the final gum product since the gum base elastomer is broken down more effectively. On the other hand, the slower the speed of the extruder, then the harder the gum as less elastomer is broken down. The optimum extruder screw speed can be selected by trial-and-error for the particular extruder and gum material utilized.

It is also possible to add solid salvage into the final finished gum extrusion process by a side feeder (not shown).

Preferably, the temperature of the extrusion process in the extruder 10 is kept to a minimum. The conveying elements should provide a minimum build-up of temperature in the barrel 14 and provide a low sheer mixing process. For this purpose, each of the barrel sections 14a-14i are separately cooled with a glycol-water mixture and kept at approximately -17.8°C (0°F). A low temperature is important since it eliminates or minimizes the volatilization of the flavoring in the material in the extruder. This is particularly preferable since flavoring ingredients are often the most expensive ingredients in the gum composition. In this regard, it is preferred to run the twin-screw extrusion machine on the order of 50 - 100 revolutions per minute (RPM) and keep the temperature of the gum material in the range of 43.5 - 51.5°C (110-125°F).

## Claims

1. A method of continuously producing a chewing gum in a continuous extrusion mixer,
said mixer having first, second and third mixing sections, with said first section being the initial upstream end of said mixer, said second section being downstream of said first section, and with a third section being positioned in between said first and second sections,
along its length,
and said chewing gum comprising at least a gum base ingredient, a sugar ingredient, a flavour ingredient, and a softener ingredient, said method comprising the steps of:
dividing said sugar ingredient into two portions;
dividing said flavour ingredient into two portions;
continuously introducing a first portion of said sugar ingredient into said first mixing section of said mixer;
continuously introducing said gum base ingredient into a downstream port;
continuously introducing a first portion of said flavour ingredient into said third mixing section of said mixer;
continuously introducing said second portion of said sugar ingredient into said second mixing section of said mixer
continuously introducing said second portion of said flavour ingredient at a downstream port;
and continuously mixing all of said ingredients into said mixer to produce a chewing gum and continuously discharging said chewing gum product from said mixer;
wherein dividing said flavour ingredient into said two portions and
introducing said first flavour portion into said mixer in said third section and
introducing said second flavour portion at a downstream port of said mixer
produces a chewing gum with an initial burst of flavour as well as a longer release of flavour; and
wherein dividing said sugar ingredient into said two portions and introducing said sugar portions into said mixer in said first and second sections of said mixer produces a chewing gum which is smooth and less granular in texture than a chewing gum where all of the sugar ingredient is added in one section of the mixer.

2. The method as set forth in Claim 1 wherein said first portion of said sugar ingredient comprises 40% of said total sugar ingredient and said second portion of said sugar ingredient comprises 60% of said total sugar ingredient.

3. The method as set forth in Claim 1 wherein said second portion of said sugar ingredient is added to said mixer by a side feeder apparatus.

4. The method as set forth in Claim 1 wherein said ingredients are mixed in said mixer at a speed of 50-100 rpm and said ingredients in said mixer are maintained in the range of 43.5-51.5°C (110-125°F).

5. The method as set forth in Claim 1 wherein said continuous extrusion mixer comprises at least one elongated screw member which rotates and mixes the ingredients in said mixer and conveys the ingredients through the mixer.

## Patentansprüche

1. Verfahren zum kontinuierlichen Herstellen von Kaugummi in einem kontinuierlichen Extrusions-Mischgerät, wobei das Mischgerät erste, zweite und dritte Mischabschnitte aufweist, wobei der erste Abschnitt das anfängliche stromaufwärtige Ende des Mischgeräts ist, der zweite Abschnitt sich stromab dieses ersten Abschnitts befindet, und ein dritter Abschnitt zwischen dem ersten und dem zweiten Abschnitt entlang seiner Länge positioniert ist,
wobei der Kaugummi mindestens einen Gummibasis-Bestandteil, einen Zucker-Bestandteil, einen Geschmackstoff-Bestandteil und einen Weichmacher-Bestandteil aufweist, und das Verfahren die folgenden Schritte umfaßt:
Aufteilen des Zucker-Bestandteils in zwei Teile,
Aufteilen des Geschmackstoff-Bestandteils in zwei Teile,
kontinuierliches Einführen eines ersten Teils des Zucker-Bestandteils in den ersten Mischabschnitt des Mischgeräts,
kontinuierliches Einführen des Gummibasis-Bestandteils in eine stromabwärtige Öffnung,
kontinuierliches Einführen eines ersten Teils des Geschmackstoff-Bestandteils in den dritten Mischabschnitt des Mischgeräts,
kontinuierliches Einführen des zweiten Teils des Zucker-Bestandteils in den zweiten Mischabschnitt des Mischgeräts,
kontinuierliches Einführen des zweiten Teils des Geschmackstoff-Bestandteils an einer stromabwärtigen Öffnung, und
kontinuierliches Mischen aller Bestandteile in dem Mischgerät, um Kaugummi zu erzeugen, und kontinuierliches Austragen des Kaugummiprodukts aus dem Mischgerät,
wobei das Aufteilen des Geschmackstoff-Bestandteils in zwei Teile und das Einführen des ersten Geschmackstoffteils in das Mischgerät in den dritten Abschnitt sowie das Einführen des zweiten Geschmackstoffteils an einer stromabwärtigen Öffnung des Mischgeräts einen Kaugummi mit einem anfänglichen Geschmacksstoffausbruch sowie einer längeren Geschmacksstofffreisetzung erzeugt, und wobei das Aufteilen des Zucker-Bestandteils in die zwei Teile und das Einführen der Zuckerteile in das Mischgerät in die ersten und zweiten Abschnitte des Mischgeräts einen Kaugummi erzeugt, der weicher und weniger körnig in der Textur ist als ein Kaugummi, bei dem der gesamte Zuckerbestandteil in einen Abschnitt des Mischgeräts hinzugefügt wird.

2. Verfahren nach Anspruch 1, wobei der erste Teil des Zuckerbestandteils 40% des Gesamt-Zuckerbestandteils umfaßt und der zweite Teil des Zuckerbestandteils 60% des Gesamt-Zuckerbestandteils umfaßt.

3. Verfahren nach Anspruch 1, wobei der erste Teil des Zuckerbestandteils dem Mischgerät durch eine seitliche Zuführvorrichtung hinzugefügt wird.

4. Verfahren nach Anspruch 1, wobei die Bestandteile in dem Mischgerät bei einer Geschwindigkeit von 50 bis 100 U/min gemischt werden und die Bestandteile in dem Mischgerät im Bereich von 43,5 bis 51,5°C (110-125°F) gehalten werden.

5. Verfahren nach Anspruch 1, wobei das kontinuierliche Extrusionsmischgerät mindestens ein längliches Schneckenelement aufweist, welches rotiert und die Bestandteile in dem Mischgerät durchmischt und die Bestandteile durch das Mischgerät fördert.

## Revendications

1. Procédé de production de chewing-gum en continu dans un mélangeur à extrusion continue, lequel mélangeur comprend une première, une deuxième et une troisième sections de mélange, ladite première section représentant l'extrémité amont initiale du mélangeur, ladite deuxième section étant située en aval de ladite première section, et ladite troisième section étant située entre lesdites première et deuxième sections sur toute sa longueur, ledit chewing-gum comprenant au moins un ingrédient à base de gomme, un ingrédient à base de sucre, un ingrédient de sapidité et un ingrédient ramollissant, procédé comprenant les étapes suivantes :
- diviser ledit ingrédient à base de sucre en deux parties ;
- diviser ledit ingrédient de sapidité en deux parties ;
- introduire en continu une première partie dudit ingrédient à base de sucre dans ladite première section de mélange dudit mélangeur ;
- introduire en continu ledit ingrédient à base de gomme dans un orifice situé en aval ;
- introduire en continu une première partie dudit ingrédient de sapidité dans ladite troisième section de mélange dudit mélangeur ;
- introduire en continu ladite seconde partie dudit ingrédient à base de sucre dans ladite deuxième section de mélange dudit mélangeur ;
- introduire en continu ladite seconde partie dudit ingrédient de sapidité dans un orifice situé en aval ; et
- mélanger en continu tous les ingrédients dans ledit mélangeur de manière à produire un chewing-gum et décharger
en continu ledit produit de type chewing-gum du mélangeur, procédé dans lequel la division de l'ingrédient de sapidité en deux parties, ainsi que l'introduction de ladite première partie de l'ingrédient de sapidité dans ledit mélangeur au niveau de ladite troisième section et l'introduction de ladite seconde partie de l'ingrédient de sapidité dans un orifice aval dudit mélangeur produit un chewing-gum ayant une explosion de goût initiale et une plus longue diffusion du goût, et dans lequel la division dudit ingrédient à base de sucre en deux parties et l'introduction desdites parties d'ingrédient à base de sucre dans ledit mélangeur au niveau desdites première et deuxième sections de ce dernier produit un chewing-gum doux et de texture moins granuleuse qu'un chewing-gum pour lequel tout l'ingrédient à base de sucre est ajouté dans une seule section du mélangeur.

2. Procédé, tel que décrit dans la revendication 1, dans lequel ladite première partie dudit ingrédient à base de sucre représente 40 % du total de l'ingrédient à base de sucre, tandis que ladite seconde partie dudit ingrédient à base de sucre représente 60 % du total de l'ingrédient à base de sucre.

3. Procédé, tel que décrit dans la revendication 1, dans lequel ladite seconde partie dudit ingrédient à base de sucre est ajoutée dans ledit mélangeur à l'aide d'un appareil d'alimentation latéral.

4. Procédé, tel que décrit dans la revendication 1, dans lequel lesdits ingrédients sont mélangés dans ledit mélangeur à une vitesse de 50 à 100 tours/minute, lesdits ingrédients dans ledit mélangeur étant maintenus à une température dans l'intervalle de 43,5 à 51,5 °C (110 à 125 °F).

5. Procédé, tel que décrit dans la revendication 1, dans lequel ledit mélangeur à extrusion continue comprend au moins un élément de type vis allongée qui tourne et mélange les ingrédients dans ledit mélangeur et assure leur transport à travers ledit mélangeur.
